Europäisches Patentamt

European Patent Office

Office européen des brevets

(11) Publication number: **0 446 368 A1**

(12) **EUROPEAN PATENT APPLICATION**
**published in accordance with Art.**
**158(3) EPC**

(21) Application number: 90913887.7

(22) Date of filing: 21.09.90

(86) International application number:
PCT/JP90/01224

(87) International publication number:
WO 91/04821 (18.04.91 91/09)

(51) Int. Cl.⁵: **B23H 7/02**

(30) Priority: 04.10.89 JP 259822/89

(43) Date of publication of application:
18.09.91 Bulletin 91/38

(84) Designated Contracting States:
DE FR GB

(71) Applicant: FANUC LTD.
3580, Shibokusa Aza-Komanba Oshinomura
Minamitsuru-gun, Yamanashi 401-05(JP)

(72) Inventor: MURAKAWA, Kazuhiko Fanuc Dai-3
Vira-karamatsu
3527-1, Shibokusa Oshinomura
Minamitsuru-gun Yamanashi 401-05(JP)

(74) Representative: Brunner, Michael John et al
GILL JENNINGS & EVERY 53-64 Chancery
Lane
London WC2A 1HN(GB)

(54) **MACHINING CONDITION SETTING METHOD FOR WIRE CUT DISCHARGE MACHINE.**

(57) (1) This invention relates to a machining condition setting method for a wire cut discharge machine which sets machining conditions for machining which repeats the same machining path a plurality of times. (3) Specific machining conditions corresponding to the designated number of machinings are called from a machining condition table and are set as actual machining conditions (S3). (2) A machining condition table defining machining conditions for each number of machinings is stored in a controller. An NC program specifying the number of machinings is read (S1) and a call instruction is interpreted (S2). (4) In this manner setting of machining conditions becomes easier and machining with a higher precision becomes possible.

FIG.1

Technical Field

The present invention relates to a method of setting a machining condition for a wire cut electric discharge machine, and more particularly, to a machining condition setting method for automatically setting a machining condition for every machining.

Background Art

A wire cut electric discharge machine machines a workpiece to a desired contour by generating a pulse between the workpiece and a wire, by dissolving a part of the workpiece, by spraying this dissolved part with a machining liquid injected from a nozzle, and by repeating this motion along a machining passage.

Further, when a machining accuracy is not obtained by one machining, a machining of the same machining passage is repeated a plurality of times. Namely, the machining accuracy is improved by dividing a machining process into a first cut, a second cut, a third cut, and a fourth cut, etc., and changing machining conditions such as machining source voltage (no-load voltage), discharge current ON time and OFF time, machining speed, etc., gradually for each machining process.

Considerable experience, however, is needed to set a machining conditions for such a machining consisting of a plurality of processes, and optimum values can not be set unless an operator is proficient in electric discharge machining, and consequently, a desired accuracy might not be obtained even if the number of machining times is increased.

Disclosure of the Invention

The present invention has been made in view of the aforesaid drawbacks, and an object of the present invention is to provide a method of setting a machining condition for a wire cut electric discharge machine by which the machining condition is automatically set at the optimum value for each machining.

To achieve the above object in accordance with the present invention, there is provided a machining condition setting method for a wire cut discharge machine for setting machining conditions of a machining in which a same machining passage is repeated a plurality of times, comprising providing a machining condition table in which at least a machining condition according to each machining is defined, calling a specific machining condition corresponding to a commanded machining order, and setting the above specific machining condition as an actual machining condition.

In a control system, a machining condition table in which a machining condition is defined according to the machining order is stored, and by, for example, commanding a machining order from an NC program, an applicable machining condition is called from the machining condition table and the machining condition is automatically set at that value.

Brief Description of the Drawings

Fig. 1 is a flow chart of a machining condition setting method of an embodiment according to the present invention;

Fig. 2 is a schematic constitutional diagram of a wire cut electric discharge machine for carrying out the present invention;

Fig. 3 is a typical diagram of a machining condition in an embodiment according to the present invention;

Fig. 4 is a diagram showing an NC program in an embodiment according to the present invention; and

Fig. 5 is a view showing a display screen in an embodiment according to the present invention.

Best Mode of Carrying Out the Invention

An embodiment of the present invention will be hereinafter described with reference to the drawings.

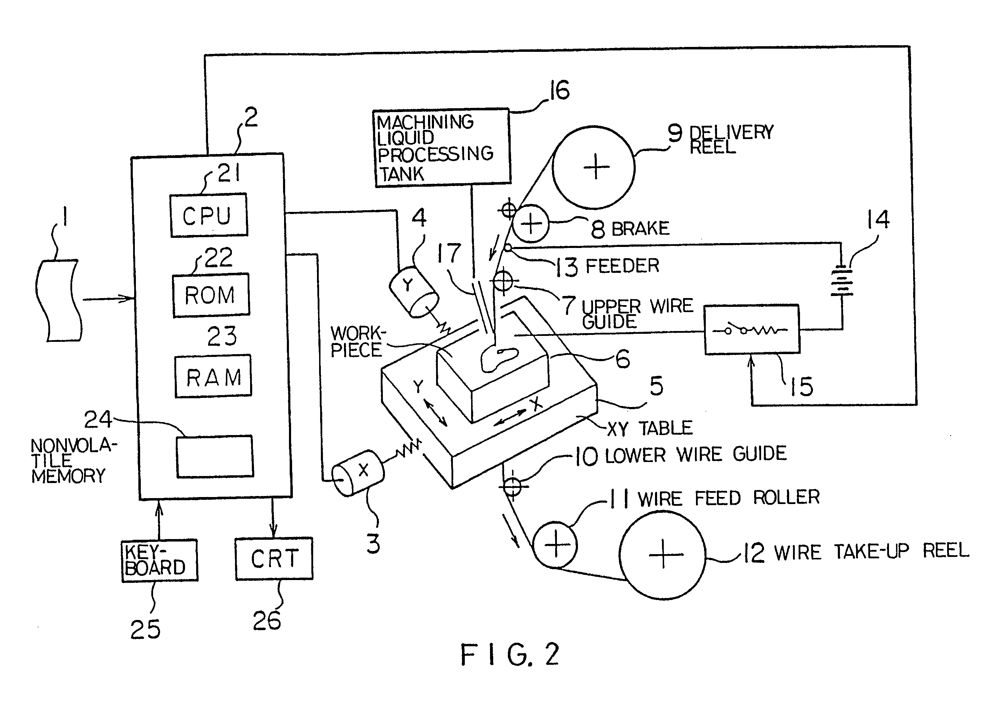

Figure 2 is a schematic constitutional diagram of a wire cut electric discharge machine for carrying out the present invention. In this Fig., a machining command such as machining shape, machining condition, etc. is input to a numerical control device 2 from an NC program 1. The numerical control device 2 consists of a processor 21 for controlling the overall operation, a ROM 22 for storing a system program, a RAM 23 for storing temporary data, and a nonvolatile memory 24 for storing a machining condition table and various parameters. When the NC program 1 is decoded, a movement control signal is output to drive an X-axis servo motor 3 and a Y-axis servo motor 4, and a predetermined electric discharge control signal is sent to an electric discharge control circuit 15. A keyboard 25 and a display unit 26 are connected to the numerical control device 2, and are used to enter various data interactively. Also, an automatically set machining condition, etc., described later, are displayed on a screen of the display unit 26.

An XY table 5 is moved to a predetermined position in the orthogonal biaxial direction by the X-axis servo motor 3 and the Y-axis servo motor 4. A workpiece 6 made of a conductive material is installed on this XY table 5.

An upper wire guide 7 and a lower wire guide 10 for holding a wire are provided on and under the XY table 5 and the workpiece 6. These upper and lower wire guides are provided for accurately positioning the wire relative to the workpiece 6. The wire is continuously delivered from a delivery reel 9 to reach the workpiece 6 through a brake 8 and the upper wire guide 7. After the wire has passed the workpiece 6, and has passed the XY table 5, it is stored in a wire take-up reel (wire collection box) 12 through the lower wire guide 10 and a wire feed roller 11.

One of terminals of a machining power source 14 is electrically connected to the wire through a feeder 13 provided between the upper wire guide 7 and the brake 8, and the other terminal is connected to the workpiece 6 through the electric discharge control circuit 15. The electric discharge control circuit 15 controls the no-load voltage, discharge current ON time and OFF time, etc. according to the electric discharge control signal output by the numerical control device 2.

A machining liquid processing tank 16 consisting of a tank, a filtering device, an ion exchanger, etc., sprays a machining liquid onto a machine part of the workpiece 6, through an injection nozzle 17.

As mentioned above, the XY table 5 is moved based on the control signals output by the numerical control device 2, the wire is delivered while sprayed with a machining liquid from the injection nozzle 17, and an intermittent discharge is obtained between the wire and the workpiecee 6. When the intermittent discharge is completed, the surface of the workpiece 6 has been vaporized and melted and the workpiece 6 thereby machined to a desired contour.

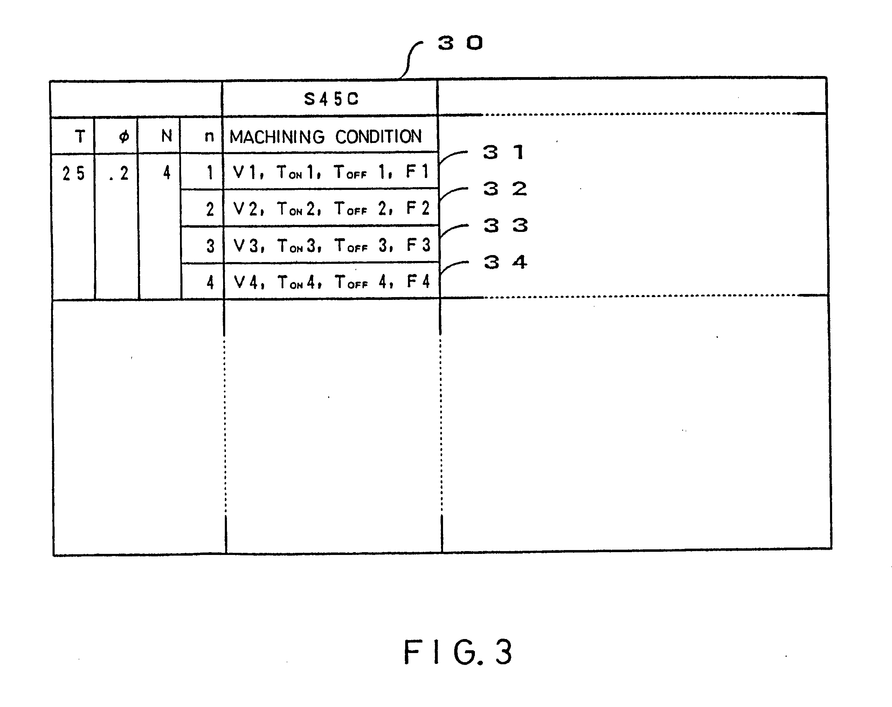

Figure 3 is a diagram typically showing a machining condition table in an embodiment according to the present invention. On a machining condition table 30 in this Fig., a predetermined machining condition is defined according to each machining for a case of, for example, using S45C for a material, a thickness of 25 mm, a wire diameter of 0.2 mm$\emptyset$, and a total number of four machining times. That is, a machining condition 31 with a no-load voltage V1, $T_{ON}1$ for the ON time, $T_{OFF}1$ for the OFF time, and F1 for the feed speed is set for the first cut, and optimum machining conditions 32, 33, and 34 calculated respectively based on machining characteristics are similarly defined for the second, third and fourth cuts. This machining condition table 30 is stored in the above mentioned nonvolatile memory 24.

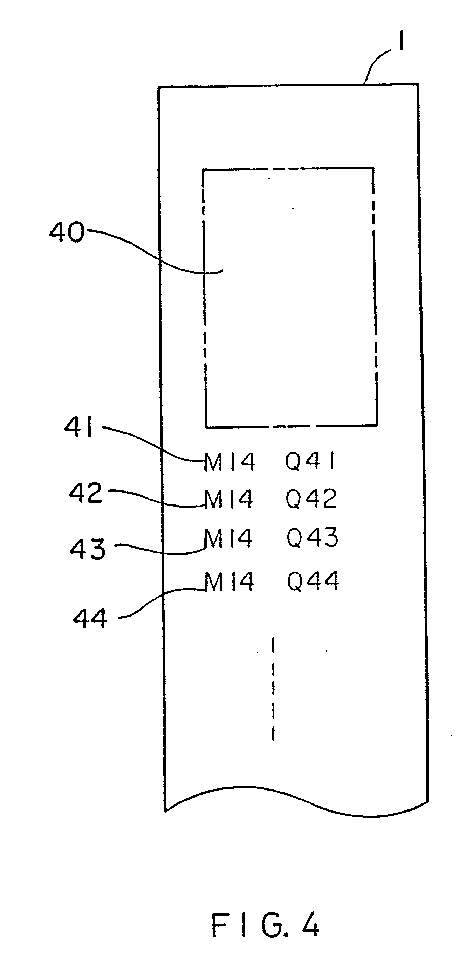

Figure 4 is a diagram showing an example of an NC program. In this Fig., machining condition call commands 41, 42, 43, and 44 are written, after a machining passage command 40, in an NC program 1. "M14" in the machining condition call command 41 means a machining condition setting command code, "Q" is a machining order command code, "4" is the total number of machining times, "1" is the first cut respectively. Each symbol in the machining condition call commands 42, 43, and 44 has the same meaning.

When the machining condition call command 41 is carried out, the machining condition 31 is called from the above-mentioned machining condition table 30 and set as an actual machining condition to be displayed on the screen of the display unit. At the same time, an electric discharge control signal and a movement control signal based on this machining condition is output by the numerical control device 2, and the machining for the first cut is executed along a commanded passage of the machining passage command 40.

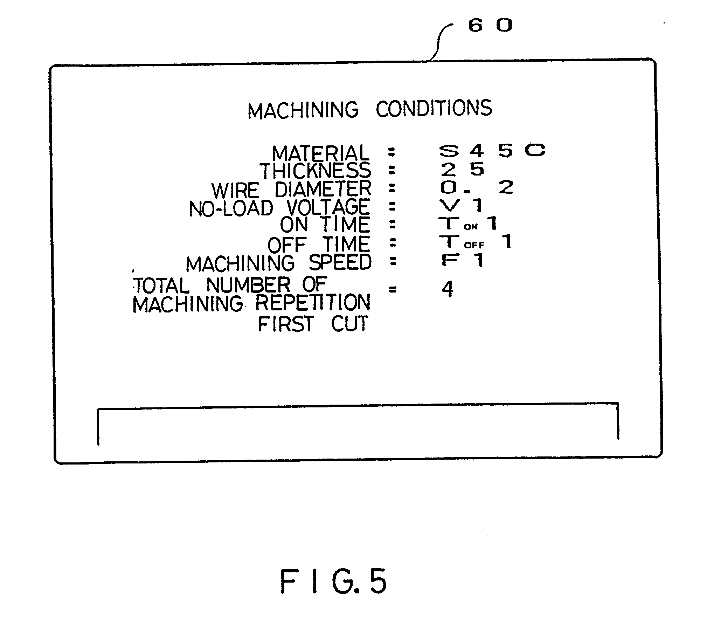

Figure 5 shows a screen for setting a machining condition. The display screen 60 in this Fig., indicates that the material is S45C, the thickness is 25 mm, the wire diameter is 0.2 mm$\emptyset$, and the cut is the first cut in the total number of four machining times, as well as an automatically set machining condition.

The process will be explained with reference to Fig. 4. When the first cut is finished, the machining condition call command 42 is carried out, and the machining condition 32 of the machining condition table 30 is called-up and set as an actual machining condition to carry out the second cut. Similarly, the machining condition call commands 43 and 44 are carried out one by one to obtain the third and the fourth cuts.

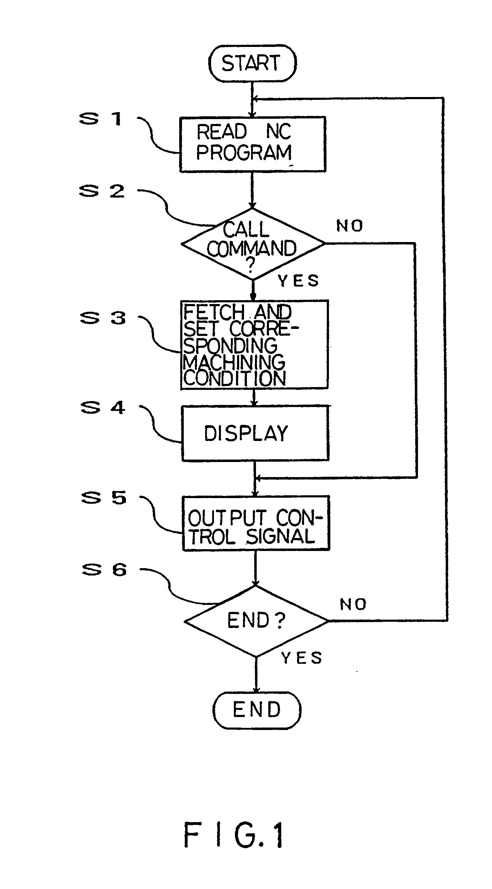

Figure 1 is a flow chart of the process of carrying out the NC program of the numerical control device 2. In this Fig., the numerical values following the letter S show the number of steps.

[S1] The NC program is decoded.

[S2] It is determined whether or not the machining condition call command is commanded, and if commanded, the process goes to S3. If not, the process goes to S5.

[S3] The commanded order of the machining of the machining condition is called from the machining condition table and set as an actual machining condition.

[S4] The set machining condition is displayed at the machining condition setting screen.

[S5] The electric discharge control signal and the movement control signal are output based on the set machining condition to carry out a machining.

[S6] It is determined whether or not the machining is finished, and if not finished, the process returns to S1.

Note, the command of the machining order can be entered, for example, interactively using a keyboard other than for the NC program. Also, a step for modifying the machining condition displayed on the screen can be inserted before the machining, instead of starting the machining after the machining condition is automatically set and displayed on the screen, as in the above flow chart.

The present invention, as described above, provides a machining condition table in which a machining condition according to the number of machining times is defined, and a machining condition corresponding to a commanded machining order is called-up and set as an actual machining condition. Therefore, the setting of a machining condition for a machining, which repeats the same machining passage a plurality of times, becomes easy, and thus a machining with a high accuracy and reduced time is obtained regardless of the proficiency of the operator.

**Claims**

1. A method of setting a machining condition for a wire cut electric discharge machine by which a machining condition of a machining in which a same machining passage is repeated a plurality of times is set, comprising:

   providing a machining condition table in which at least a machining condition according to each machining is defined;

   calling a specific machining condition corresponding to a commanded machining order from said machining condition table; and

   setting said specific machining condition as an actual machining condition.

2. A machining condition setting method for a wire cut electric discharge machine according to claim 1, wherein said command of the machining order is carried out by an NC program.

3. A machining condition setting method for a wire cut electric discharge machine according to claim 1, wherein said command of the machining order is carried out interactively.

4. A machining condition setting method for a wire cut electric discharge machine according to claim 1, wherein a specific machining condition set as said actual machining condition is displayed at a display screen.

S 1 — READ NC PROGRAM

S 2 — CALL COMMAND ? — NO

YES

S 3 — FETCH AND SET CORRE-SPONDING MACHINING CONDITION

S 4 — DISPLAY

S 5 — OUTPUT CONTROL SIGNAL

S 6 — END ? — NO

YES

START

END

F I G.1

F I G. 2

EP 0 446 368 A1

EP 0 446 368 A1

30

| | | | | S45C | | |
|---|---|---|---|---|---|---|
| T | φ | N | n | MACHINING CONDITION | | |
| 25 | .2 | 4 | 1 | $V1, T_{ON}1, T_{OFF}1, F1$ | | 31 |
| | | | 2 | $V2, T_{ON}2, T_{OFF}2, F2$ | | 32 |
| | | | 3 | $V3, T_{ON}3, T_{OFF}3, F3$ | | 33 |
| | | | 4 | $V4, T_{ON}4, T_{OFF}4, F4$ | | 34 |

FIG. 3

F I G. 4

60

MACHINING CONDITIONS

MATERIAL : S 4 5 C
THICKNESS : 2 5
WIRE DIAMETER : 0 . 2
NO-LOAD VOLTAGE : V 1
ON TIME : $T_{ON}$ 1
OFF TIME : $T_{OFF}$ 1
MACHINING SPEED : F 1
TOTAL NUMBER OF = 4
MACHINING REPETITION
FIRST CUT

# F I G. 5

# INTERNATIONAL SEARCH REPORT

International Application No  PCT/JP90/01224

## I. CLASSIFICATION OF SUBJECT MATTER (if several classification symbols apply, indicate all) 6

According to International Patent Classification (IPC) or to both National Classification and IPC

Int. Cl⁵   B23H7/02

## II. FIELDS SEARCHED

### Minimum Documentation Searched 7

| Classification System | Classification Symbols |
|---|---|
| IPC | B23H7/02, 7/06 |

### Documentation Searched other than Minimum Documentation to the Extent that such Documents are Included in the Fields Searched 8

| | |
|---|---|
| Jitsuyo Shinan Koho | 1926 - 1990 |
| Kokai Jitsuyo Shinan Koho | 1971 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 64-64723 (Amada Co., Ltd.), March 10, 1989 (10. 03. 89), Lines 15 to 20, upper right column, lower left column, lower right column, page 2, lines 1 to 4, upper left column, lower left column, page 3, Fig. 1 (Family: none) | 1-4 |
| Y | JP, A, 63-229228 (Mitsubishi Electric Corp.), September 26, 1988 (26. 09. 88), Lines 10 to 20, lower left column, lines 1 to 15, lower right column, page 6, Fig. 3 (Family: none) | 1-4 |
| P | JP, A, 2-53526 (K.K. Hoden Seimitsu Kako Kenkyusho), February 22, 1990 (22. 02. 90), Lines 6 to 20, lower left column, lower right column, page 2, lines 1 to 3, upper left column, page 3, Fig. 1 (Family: none) | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 11, 1990 (11. 12. 90) | December 25, 1990 (25. 12. 90) |
| International Searching Authority | Signature of Authorized Officer |
| Japanese Patent Office | |

Form PCT/ISA/210 (second sheet) (January 1985)